# EUROPÄISCHE PATENTSCHRIFT

(11) **EP 2 480 910 B1**
(45) Veröffentlichungstag und Bekanntmachung des Hinweises auf die Patenterteilung: **01.01.2014**
(21) Anmeldenummer: 10744950.6
(22) Anmeldetag: 24.08.2010
(51) Int. Cl.: G01S 7/52, G01S 7/54, G01S 15/88

(54) **VERFAHREN UND VORRICHTUNG ZUM VERMESSEN EINES BODENPROFILS**
METHOD AND DEVICE FOR MEASURING A PROFILE OF THE GROUND
PROCÉDÉ ET DISPOSITIF DE MESURE DU PROFIL DU SOL

(30) Priorität: 24.09.2009 DE 102009042970
(43) Veröffentlichungstag der Anmeldung: 01.08.2012
(73) Patentinhaber: ATLAS ELEKTRONIK GmbH, 28309 Bremen (DE)
(72) Erfinder: FREKING, Benno, 28844 Weyhe-Leeste (DE)
(86) Internationale Anmeldenummer: PCT/EP2010/062346
(87) Internationale Veröffentlichungsnummer: WO 2011/036012

(56) Entgegenhaltungen:
- GB-A- 2 197 952
- US-A- 5 200 931

## Beschreibung

Die Erfindung betrifft ein Verfahren zum Vermessen eines Bodenprofils mittels einer an einem Wasserfahrzeug angebrachten akustischen Sende- und Empfangsanordnung der im Oberbegriff des Anspruchs 1 genannten Art sowie eine Vorrichtung zum Ausführen des Verfahrens gemäß Anspruch 4.

Die Erfindung wir primär zur Vermessung eines Bodenprofils innerhalb eines vorbestimmten Unterwasserareals angewandt. Herkömmlicherweise werden zur Vermessung eines Bodenprofils innerhalb eines vorbestimmten Unterwasserareals sog, Fächerlotsysteme eingesetzt. Sie erfassen meist einen bis zu 150 Grad großen Winkelsektor quer zur Fahrtrichtung und vermessen diesen im Wesentlichen gleichzeitig. Dazu werden Schallimpulse ausgesendet, welche nach Reflexion an einem Objekt bzw. dem Gewässergrund als Echos mittels der Empfangsanordnung richtungsselektiv empfangen werden. Durch eine im Rahmen einer sog. Richtungsbildung durchgeführten elektronischen Signalverarbeitung einzelner Empfangssignale der Wandler der Empfangsanordnung wird erreicht, dass die Empfangsanordnung in dem vorbestimmten Unterwasserareal einen Fächer von einer Vielzahl gegeneinander verschwenkter Richtcharakteristiken aufweist.

Um bei der Vermessung des Bodenprofils genaue Details der Bodenstruktur oder versunkener Objekte sichtbar zu machen, wird eine hohe Winkelauflösung gefordert. Herkömmlicherweise wird eine hohe Winkelauflösung durch Bündelung der Richtcharakteristik beim Senden und/oder Empfangen erreicht. Eine übliche Maßnahme besteht darin, die Abmessung der Sende- und/oder Empfangsanordnung zu vergrößern, um den Öffnungswinkel ihrer Richtcharakteristik zu verkleinern. Diese Methode setzt jedoch große Wandlerbasen voraus und ist daher sehr kostenintensiv.

Neben dem o.g. Verfahren mittels großer Wandlerbasen als Empfangsanordnung, deren Auflösung durch ihre Bauart beschränkt ist, sind auch sog. hochauflösende Verfahren zur Winkelbestimmung bekannt. Zu diesen Verfahren zählt unter anderem das MUSIC (Multiple Signal Classification)-Verfahren. Die Genauigkeit der Ergebnisse ist jedoch auch bei diesen Verfahren abhängig von der Wandleranzahl der Empfangsanordnung. Je mehr Wandler die Empfangsanordnung besitzt und je länger der verarbeitende Signalblock ist, desto genauer sind die Ergebnisse. Der Nachteil dieser Verfahren liegt zudem in ihrem Rechenaufwand, der einen Einsatz in Echtzeitsystemen erschwert.

Alternativ sind Sonarsysteme mit interferometrischer Technik bekannt, um die Auflösung bei der Vermessung des Bodenprofils zu erhöhen Sie verwenden eine interferometrische Signalverarbeitung mit bspw. einer Differenzphasenmessung. In dem Artikel "Signal Processing Strategies for a Bathymetric Sidescan Sonar" von Philip N. Denbigh aus IEEE Journal of Oceanic Engineering, 19(3): 382-390, July 1994 sind Prinzipien der direkten Phasendifferenzmessung in interferometrischen Systemen näher beschrieben. Dazu wird eine zweite, unabhängig von der ersten arbeitende Empfangsantenne benötigt. Diese liefert ein weiteres Empfangssignal, welches durch die unterschiedlichen Entfernungen zum Objekt ein zur ersten Antenne zeitverzögertes Signal liefert. Eine gemessene Phasenverschiebung zwischen den Empfangssignalen der verschiedenen Antennen ist jedoch mehrdeutig. Lediglich bei einem Abstand der Antennen kleiner als λ/2 ist die gemessene Phasendifferenz eindeutig

US 5,200,931 A zeigt ein Verfahren sowie eine Vorrichtung zum Erstellen von dreidimensionalen Sonarbildern. Das Verfahren basiert auf einer zweidimensionalen differenziellen Phasenmessung der rückgestreuten Sonarsignale. Zur Durchführung des Verfahrens weist die Wandleranordnung eine spezielle Geometrie auf, so dass zwischen den Wandlern ein Abstand weniger als die halbe Wellenlänge der Betriebsfrequenz existiert. Dies stellt sicher, dass keine Mehrdeutigkeiten bei der Ermittlung der Phasendifferenzen auftreten.

Herkömmlicherweise wird bei direkter Phasendifferenzmessung ein Sonarsystem mit 3 bis 4 Empfangsantennen verwendet. Damit stehen drei Phasendifferenzen zur Verfügung, die dazu verwendet werden, die gemessenen Phasen zu korrigieren. Der Nachteil dieses Verfahrens ist der ebenfalls hohe Aufwand an Antennen.

GB 2 197 952 zeigt ein Echolotsystem zur Vermessung eines Gewässergrundes, bei dem ein Bereich des Gewässergrundes mit einem akustischen Signal beleuchtet wird, dessen Energie mittels zwei Wandlern empfangen wird. Eine relative Phase der beiden Wandlerausgangssignale zeigt eine Richtung des Bodenpunktes an, von dem das Echo empfangen wird. Allerdings entstehen Mehrdeutigkeiten bei einer derartigen Richtungsbestimmung in Abhängigkeit vom Abstand der Wandler. Durch die Verwendung von Sendesignalen mit zwei oder mehr Frequenzen wird diese Mehrdeutigkeit aufgelöst, denn bei einer Verwendung von bspw. zwei verschiedenen Frequenzen entstehen auch zwei verschiedene charakteristische Keulenmuster. Idealerweise stimmen lediglich die Hauptkeulen der jeweiligen Muster überein, wodurch sich die zuvor erwähnten Mehrdeutigkeiten bei der Winkelbestimmung auflösen lassen.

EP 1 793 243 A1 zeigt ein weiteres Verfahren zur Auflösung von Phasenmehrdeutigkeiten. Dabei wird zur Ermittlung von Entfernungsinformation mittels eines Phasenmessprinzips ein Signal mit wenigstens zwei verschiedenen Wellenlängen ausgesandt und deren Reflektion empfangen sowie die zugehörigen Phasen ermittelt. Zur Auflösung von Phasenmehrdeutigkeiten wird ein Mehrdeutigkeitsintervall in Zellen definierter Breite diskretisiert. Jeder Zelle werden ein Zähler und eine Distanz zugeordnet. Für die Zellen, welche einer möglichen Zieldistanz zugeordnet sind, erfolgt ein Inkrementieren des Zählerstandes. Aus der Verteilung der Zählerstände wird eine Absolutphase oder eine wahre Zieldistanz zu wenigstens einem Zielobjekt bestimmt.

Der Erfindung liegt nach alledem das Problem zugrunde, ein kostengünstiges Verfahren zum Vermessen eines Bodenprofils zu schaffen.

Die Erfindung löst dieses Problem durch die Merkmale eines Verfahrens zum Vermessen eines Bodenprofils gemäß Anspruch 1 sowie durch eine entsprechende Vorrichtung mit den Merkmalen des Anspruchs 4. Dabei wird nacheinander mittels einer Sendeanordnung mit einer Mehrzahl N vorbestimmten, voneinander verschiedenen Frequenzen ein Schallsignal in das Unterwasserareal abgestrahlt und dessen vom Bodenprofil reflektierten Anteile mittels einer Empfangsanordnung empfangen, wobei die Empfangsanordnung wenigstens zwei Wandler aufweist, die aus den empfangenen Schallwellen jeweils ein elektrisches Empfangssignal erzeugen und in einem Abstand größer als die halbe Wellenlänge des Empfangssignals angeordnet ist. Aus den Empfangssignalen sind die N verschiedenen Frequenzen des Sendesignals herausfilterbar. Die Vermessung des Bodenprofils erfolgt anhand dieser gefilterten Empfangssignale unter Verwendung einer reinen Phasenauswertung und einer anschließenden Dichteanalyse.

Abhängig von dem Abstand der Wandler der Empfangsanordnung und der Frequenz bzw. der Wellenlänge des ausgesendeten Schallsignals liefert eine reine Phasenauswertung möglicherweise vieldeutige Ergebnisse. Das erfindungsgemäße Verfahren berücksichtigt jedoch zunächst diese Vieldeutigkeit bei der Winkelbestimmung nicht.

Die durch die vieldeutigen Ergebnisse entstehende Mehrfachmessung mit unterschiedlichen Frequenzen des abgestrahlten Schallsignals wird zur eindeutigen Bestimmung des Bodenprofils unter Verwendung einer Dichteanalyse ausgenutzt. Dabei liefert eine Phasendifferenz zwischen zwei Empfangssignalen zu einer Vielzahl vorbestimmter Abtastzeitpunkte und zu jeder Frequenz des abgestrahlten Schallsignals abhängig von dem Abstand der Wandler der Empfangsanordnung mehrere vieldeutige Gangunterschiede sowie zu diesen Gangunterschieden zugehörige Empfangswinkel. Mithilfe der Laufzeiten und der Empfangswinkel werden für diese Abtastzeitpunkte und für die Frequenzen Auftreffkoordinaten (x, y, z) ermittelt. Anschließend wird für die Auftreffkoordinaten (x, y, z) eine Datendichte innerhalb eines vorbestimmten, die Auftreffkoordinate (x, y, z) beinhaltendes Flächenelementes ermittelt, wobei die Datendichte ein Maß für die Anzahl der zuvor ermittelten Auftreffkoordinaten innerhalb dieses Flächenelementes darstellt.

An der Stelle, an der sich die wahre Auftreffkoordinate (x, y, z) befindet, erhöht sich die Dichte der Messwerte. Die Stellen der weiteren Auftreffkoordinaten, die sich aufgrund der Phasenauswertung ergeben, weisen eine geringere Datendichte auf. Das erfindungsgemäße Verfahren liefert somit eine Methode um festzustellen, welches die wahre Auftreffkoordinate (x, y, z) des Schallsignals ist. Daraus lässt sich ein Bodenprofil ermitteln.

Das erfindungsgemäße Verfahren hat den Vorteil, dass trotz einer zuvor erwähnten Vieldeutigkeit der Winkelbestimmung bei Verwendung einer Empfangsanordnung mit nur zwei Wandlern eindeutige Messergebnisse erzielt werden können, indem die Vermessung des Bodenprofils mit unterschiedlichen Frequenzen erfolgt und anschließend eine Dichteanalyse durchgeführt wird.

In einer weiteren Ausführungsform der Erfindung wird die Datendichte nicht über die Auftreffkoordinaten (x, y, z) erhoben, sondern über die aus dem Gangunterschied berechneten Auftreffwinkel.

In einer weiteren Ausführungsform der Erfindung besitzt die erfindungsgemäße Vorrichtung den Vorteil, dass sie sich unter Verwendung einer Empfangsanordnung mit zwei einzelnen Wandlern mit sehr kleinen Abmessungen herstellen lässt. Sie kann beispielsweise auch von kleinen, autonomen agierenden oder ferngesteuerten Unterwasserfahrzeugen getragen werden. Das erfindungsgemäße Verfahren nutzt zum Empfangen der von dem Bodenprofil reflektierten Schallwellen eine Empfangsanordnung, welche wenigstens zwei einzelne elektroakustische oder optoakustische Wandler aufweist, die in einem beliebigen Abstand angeordnet sein können.

In einer weiteren Ausführungsform der Erfindung wird als Empfangsvorrichtung ein Wandler-Array verwendet. Ein der Empfangsanordnung nachgeschalteter Richtungsbildner, der in dem Unterwasserareal einen Fächer von einer Vielzahl gegeneinander verschwenkter Richtcharakteristiken erzeugt, hat den Vorteil, die Auflösung des Sonarsystems entsprechend der Breite der Richtcharakteristik zu erhöhen.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:
- Fig. 1: eine schematische Darstellung eines Wasserfahrzeugs mit dem zu erfassenden Unterwasserareal;
- Fig. 2A-B: eine schematische Darstellung der Sende- und Empfangsanordnung;
- Fig. 3: eine schematische Darstellung der Empfangsanordnung;
- Fig. 4: ein Blockschaltbild des erfindungsgemäßen Verfahrens;
- Fig. 5: eine schematische Darstellung einer auf die Wandler treffenden Schallwellenfront;
- Fig. 6: eine schematische Darstellung von vieldeutigen Gangunterschieden.

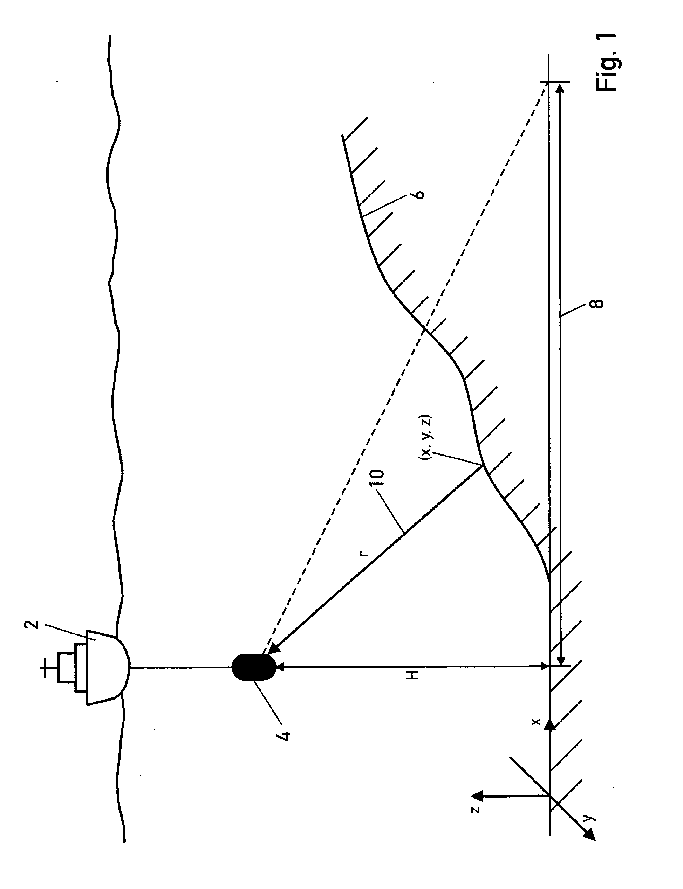

Fig. 1 zeigt eine schematische Darstellung eines in einem Seegebiet fahrenden Wasserfahrzeugs 2 mit einer Sende- und Empfangsanordnung 4. Mittels einer seitlichen Abstrahlung von gerichteten Schallsignalen werden Messdaten eines Bodenprofils 6 erhoben. Das erfindungsgemäße Verfahren ist jedoch nicht auf eine seitliche Schallabstrahlung beschränkt, bspw. durch Verwendung eines sog. Side-Scan-Sonarsystems. Die Sende- und Empfangsanordnung 4 kann ebenso gemäß einem sog. Forward-Looking-Sonarsystem ausgebildet sein und ein Unterwasserareal vor dem Fahrzeug beleuchten.

In Fig. 1 ist eine Messgeometrie gemäß eines Ausführungsbeispiels dargestellt. Die Entfernung *r* eines Bodenpunktes (x, y, z) zur Sende- und Empfangsanordnung 4 lässt sich aus einer gemessenen Signallaufzeit *τ* ermitteln. Ein Schallimpuls benötigt eine gewisse Zeit, bis er den Boden erreicht, reflektiert wird und nach einer weiteren Laufzeit an der Empfangsanordnung eintrifft. Aufgrund dieser messbaren Gesamtlaufzeit *τ* kann mittels einer bekannten Schallgeschwindigkeit die Entfernung r des Bodenpunktes (x, y, z) ermittelt werden.

Ferner ist eine Höhe *H* in Lotrichtung zu der Sende- und Empfangsanordnung 4 über eine Bezugsebene angegeben.

Zur Vermessung des Bodenprofils 6 werden von der Sende- und Empfangsanordnung 4 impulsförmige Schallsignale gerichtet in ein Unterwasserareal 8 abgestrahlt und die reflektierten Schallwellen 10 einzelner Bodenpunkte (x, y, z) empfangen. Dabei weist die Sende- und Empfangsanordnung 4 quer zur Fahrtrichtung eine sehr weite Richtcharakteristik und in Fahrzeuglängsrichtung eine stark gebündelte Schallabstrahlung auf. Dadurch werden nur die Echos eines schmalen Bodenstreifens empfangen.

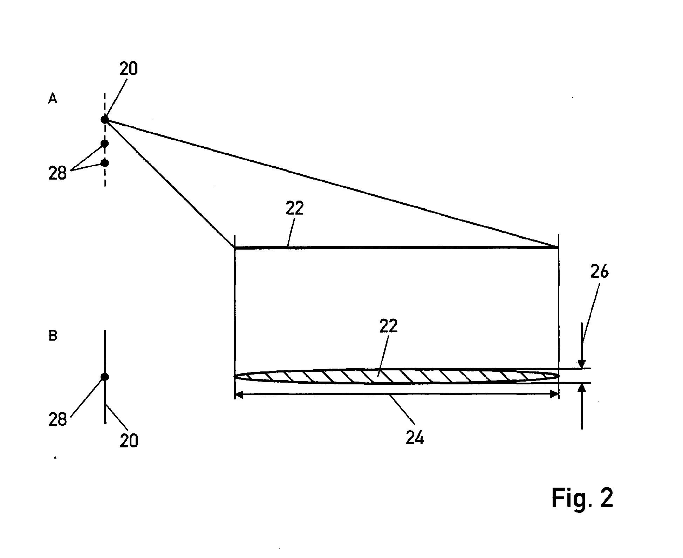

Die Ausdehnung des beleuchteten Unterwasserareals 8 ist abhängig von der Sende- und Empfangsanordnung 4, welche in Fig. 2 detailliert dargestellt ist.

Fig. 2A-B zeigen eine schematische Darstellung der Sende- und Empfangsanordnung 4. In Fig. 2A ist eine Seitenansicht dargestellt und in Fig. 2B eine Draufsicht der gleichen Anordnung.

Die Sendeanordnung 20 weist eine Vielzahl auf einem Antennenträger angeordneter Wandler auf, welche gerichtete Schallsignale in Form eines Sendebeams 22 in ein vorbestimmtes Unterwasserareal 8 aussenden. Der so entstehende Sendebeam 22 in Form einer Ellipse hat eine Länge 24 und eine Breite 26, wobei die Form und die Maße abhängig sind von der Anzahl und der Anordnung der Wandler der Sendeanordnung 20.

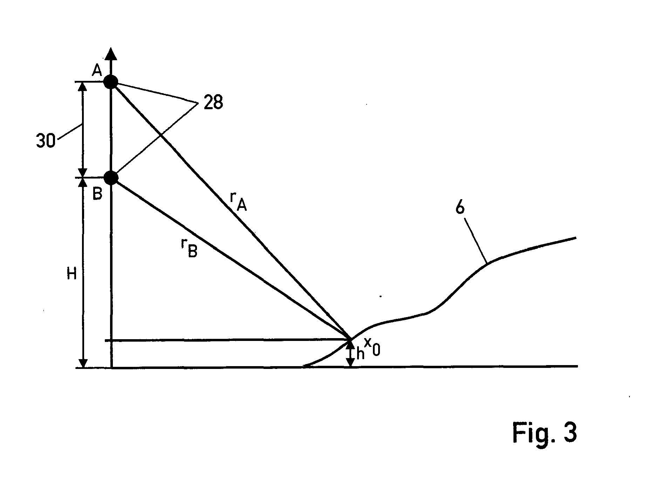

Von dieser Sendeanordnung 20 wird kurz nacheinander mit einer Mehrzahl N vorbestimmten, voneinander verschiedenen Frequenzen ein Schallsignal in das Unterwasserareal 8 gesendet. Die von dem Bodenprofil 6 innerhalb des Unterwasserareals 8 reflektierten Anteile des Schallsignals werden über die Empfangsanordnung 28 empfangen, welche in Fig. 3 detailliert dargestellt ist.

Fig. 3 zeigt eine schematische Darstellung der Empfangsanordnung 28.

Um zusätzlich zu der Entfernung *r* auch eine Höhe *h* des Bodenprofils 6 zu ermitteln, wird eine Empfangsanordnung 28, mit wenigstens zwei voneinander beabstandeten Wandlern benötigt. In dieser beispielhaften Ausführungsform der Erfindung besteht die Empfangsanordnung 28 aus zwei einzelnen Wandlern A und B, wie sie in Fig. 3 dargestellt sind. Sie weisen einen Abstand 30 voneinander auf, der größer ist als die halbe Wellenlänge λ des von der Sendeanordnung 20 abgegebenen Schallsignals.

Es ist jedoch gleichwohl möglich eine vorhandene Wandlerbasis zu nutzen, aus der zwei Wandler herausgegriffen werden. Ebenso ist das erfindungsgemäße Verfahren mit zwei Wandler-Arrays, welche übereinander gemäß Fig. 2 angeordnet sind, durchführbar. Erfordert es die Bauart des Wasserfahrzeugs 2, so können die Wandler auch leicht versetzt angeordnet sein. Die Geometrie der Empfangsanordnung 28 wird bei einer Signalverarbeitung der Empfangssignale entsprechend berücksichtigt. Dazu werden die Empfangssignale mittels bekannter Signalverarbeitungsverfahren derart bearbeitet, um eine räumliche Anordnung der Wandler gemäß dem Ausführungsbeispiel zu simulieren.

Der Wandler A liefert ein Empfangssignal, welches durch die unterschiedlichen Entfernungen *r_{A}* und *r_{B}* zum Bodenpunkt *x*₀ gegenüber dem Wandler B zeitverzögert ist. Die vom Punkt *x*₀ reflektierten Anteile des gesendeten Schallsignals erreichen zuerst den Wandler B und um Δ*t* verzögert den Wandler A. Dadurch lässt sich eine Höhe *h* ermitteln, die bezogen ist auf eine Höhe H der Bezugsebene in Lotrichtung unter der Empfangsanordnung 28.

Die Empfangssignale der Wandler A und B werden entsprechend dem erfindungsgemäßen Verfahren ausgewertet. Sie weisen eine zur Wegdifferenz Δ*r* proportionale Phasendifferenz Δ*ϕ* auf.

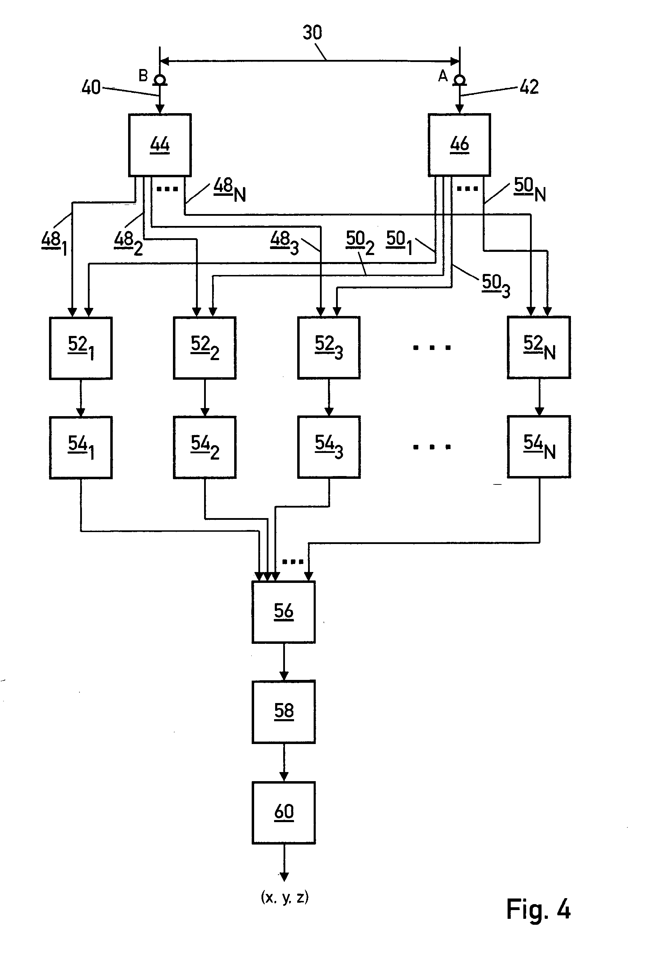

Fig. 4 zeigt ein Blockschaltbild des erfindungsgemäßen Verfahrens.

Die elektrischen Empfangssignale 40 und 42 der Wandler A und B werden jeweils in einem Verarbeitungsblock 44 bzw. 46 zu vorbestimmten Abtastzeitpunkten abgetastet und digitalisiert. Ferner werden die N voneinander verschiedenen Frequenzen des Sendesignals aus den Empfangssignalen 40 und 42 herausgefiltert.

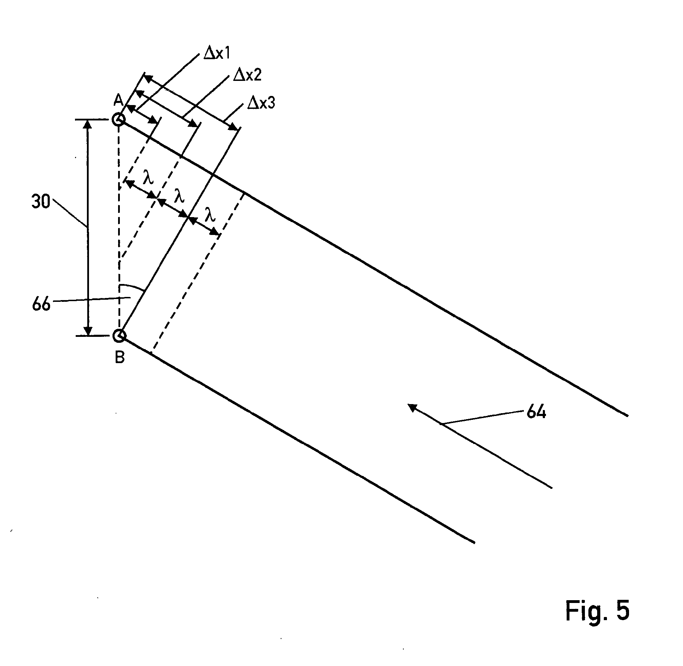

Die Verarbeitungsblöcke 44 bzw. 46 liefern somit jeweils N Signale: 48₁, 48₂, ...,48_{N} bzw. 50₁, 50₂, 50₃, ..., 50_{N}, die parallel für die N verschiedenen Frequenzen weiterverarbeitet werden. In der Berechnungseinheit 52₁ werden für eine Vielzahl der Abtastzeitpunkte sowohl die Phasendifferenz Δ*ϕ* zwischen den Signalen 48₁ und 50₁ als auch die Laufzeiten *τ* dieser Signale ermittelt. Dies erfolgt ebenso in der Berechnungseinheit 52₂ für die Signale 48₂ und 50₂ sowie in der Berechnungseinheit 52₃ für die Signale 48₃ und 50₃, bis zu der Berechnungseinheit 52_{N} für die Signale 48_{N} und 50_{N}. Auf diese Weise werden für eine Vielzahl der Abtastzeitpunkte und für die N Frequenzen die Phasendifferenzen Δ*ϕ* und die Laufzeiten *τ* der Empfangssignale der Wandler A und B ermittelt. Abhängig von dem Abstand 30 der beiden Wandler sind jedoch Vieldeutigkeiten bei den ermittelten Phasendifferenzen Δ*ϕ* möglich. Dies ist in Fig. 5 detailliert dargestellt.

Fig. 5 zeigt eine schematische Darstellung einer auf die Wandler A und B auftreffenden Schallwellenfront 64. Ist der Abstand 30 der beiden Wandler A und B größer als die halbe Wellenlänge *λ* der empfangenen Schallwellenfront 64, so kommt es zu Vieldeutigkeiten bei den ermittelten Phasendifferenzen Δ*ϕ*. Die ermittelte Phasendifferenz Δ*ϕ* der Empfangssignale zwischen den Wandlern A und B wird modulo 2*π* gemessen und liefert somit eine Anzahl vieldeutiger Gangunterschiede Δ*x*1, Δ*x*2, Δ*x*3 in Abhängigkeit vom Abstand 30 der Wandler A und B wie in Fig. 5 beispielhaft dargestellt.

Der Gangunterschied Δ*x*3 entspricht bei dieser beispielhaften Ausführungsform dem wahren Gangunterschied der Empfangssignale zwischen den Wandlern A und B. Dieser Gangunterschied Δ*x*3 liefert im Zusammenhang mit dem Abstand 30 der Wandler einen zugehörigen Empfangswinkel 66 gemäß der Definition des Sinus eines Winkels am rechtwinkligen Dreieck. Da die Gangunterschiede und damit auch der Empfangswinkel 66 abhängig sind von der Wellenlänge *λ* der empfangenen Schallwellenfront 64, werden zu jeder der N Frequenzen des Sendesignals verschiedene Gangunterschiede bzw. Empfangswinkel 66 ermittelt.

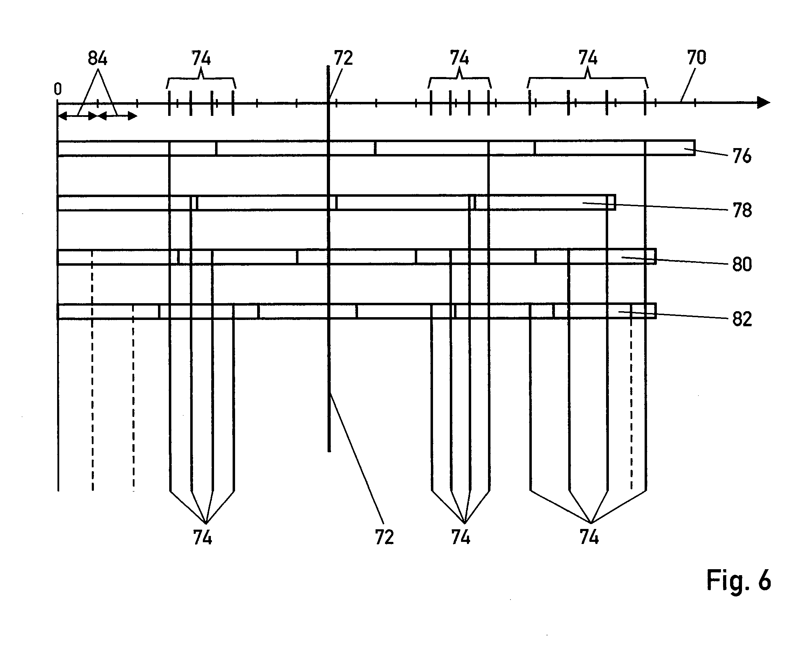

Das Blockschaltbild aus Fig. 4 zeig in einem nächsten Verfahrensschritt die Berechnungseinheit 54 in der blockweise 54₁...5₄N für eine Vielzahl der Abtastzeitpunkte und für die N Frequenzen mittels der zuvor ermittelten Phasendifferenzen Δ*ϕ* die vieldeutigen Gangunterschiede ermittelt werden. Diese werden zu den Abtastzeitpunkten und für die N Frequenzen einer weiteren Berechnungseinheit 56 übergeben, die daraus eine Datendichte der Gangunterschiede ermittelt. Die Datendichte stellt dabei ein Maß für die Anzahl der erhobenen Daten dar und wird anhand Fig. 6 näher erläutert.

Fig. 6 zeigt eine schematische Darstellung der vieldeutigen Gangunterschiede beispielhaft für vier verschiedene Wellenlängen bzw. vier verschiedene Frequenzen.

Auf einer horizontal verlaufenden Achse 70 wird der Gangunterschied angegeben. An einer Stelle 72 auf dieser Achse 70 befindet sich der wahre Gangunterschied. Der wahre Gangunterschied ist derjenige Gangunterschied, der zu derjenigen eindeutigen Phasendifferenz Δ*ϕ* der Empfangssignale gehört, welcher die tatsächliche Wegdifferenz Δ*r* der Schallsignale beider Wandler A und B beschreibt. An dieser Stelle 72 liegen die einzelnen Gangunterschiede der vier Frequenzen übereinander. Die Markierungen 74 geben die vieldeutigen Gangunterschiede an, welche sich aus den unterschiedlichen Phasendifferenzen Δ*ϕ* der unterschiedlichen Frequenzen bzw. Wellenlängen 76, 78, 80 und 82 ergeben. An diesen Stellen 74 sind die einzelnen Gangunterschiede der vier Frequenzen etwas versetzt. Um eindeutige Ergebnisse bei der Vermessung des Bodenprofils zu erhalten, ist es notwendig, die eindeutige Phasendifferenz Δ*ϕ* bzw. den wahren Gangunterschied der Empfangssignale zu ermitteln.

Dazu wird die Achse 70 in eine Mehrzahl gleichgroßer Intervalle 84 mit einer vorbestimmten, ausreichend kleinen Länge aufgeteilt. Die Länge der Intervalle 84 ist dabei abhängig, wie weit die einzelnen Gangunterschiede minimal versetzt sind. Die Länge der Intervalle 84 darf nicht größer sein, als die geringste Versetzung der Gangunterschiede der kleinsten Wellenlänge zur größten Wellenlänge. Es wird für jedes Intervall 84 eine Datendichte der Gangunterschiede berechnet. Sie ist ein Maß für die Anzahl der Gangunterschiede innerhalb dieses Intervalls. Dasjenige Intervall 84, in dem sich der wahre Gangunterschied befindet, enthält eine maximale Datendichte, da dieses Intervall 84 die Gangunterschiede aller vier Frequenzen beinhaltet.

Die weitere Berechnungseinheit 56 aus Fig. 4 beinhaltet zudem einen Maximumdetektor, um für die Abtastzeitpunkte die maximale Datendichte zu ermitteln. Zu jedem Abtastzeitpunkt, zu dem ein Gangunterschied ermittelt wurde, wird derjenige Gangunterschied, dessen zugehöriges Intervall 84 die größte Datendichte aufweist, für das weitere Verfahren als gültig gekennzeichnet. Die anderen zu diesem Abtastzeitpunkt zugehörigen vieldeutigen Gangunterschiede werden als ungültig gekennzeichnet.

Anhand des gültigen Gangunterschiedes lässt sich in einem Verarbeitungsblock 58 für die Abtastzeitpunkte eine zugehörige Signallaufzeit *τ* des entsprechenden, empfangenen Signals und ein zugehöriger Empfangswinkel 66, entsprechend Fig. 5, ermitteln. Aus diesen Daten wird für die Abtastzeitpunkte ein dem gültigen Gangunterschied zugehöriger Auftreffwinkel auf dem Bodenprofil ermittelt. Dies erfolgt anhand bekannter Gesetzmäßigkeiten der Trigonometrie der Messgeometrie.

Aus den zuvor ermittelten Auftreffwinkeln wird in einem Verarbeitungsblock 60 zu den Abtastzeitpunkten eine zugehörige Auftreffkoordinate (x, y, z) des Bodenprofils 6 bestimmt. Die x-Koordinate lässt sich zu jedem Abtastzeitpunkt mittels der Gesetze der Trigonometrie ermitteln, die y-Koordinate ist abhängig von der Breite 26 des Sendebeams 22 und die z-Koordinate entspricht einer aus dem ermittelten wahren Gangunterschied der Empfangssignale der Wandler A und B ermittelten Höhe h.

Das Koordinatensystem ist in diesem Ausführungsbeispiel auf das Wasserfahrzeug 2 bezogen. Es ist jedoch ferner möglich ein absolutes Koordinatensystem für die Durchführung des Verfahrens heranzuziehen, wenn es in der Signalverarbeitung entsprechend berücksichtigt wird.

Das vorstehend beschriebene Verfahren zur Vermessung eines Bodenprofils 6 kann dahingehend abgewandelt werden, dass die Datendichte nicht über die Gangunterschiede erhoben wird, sondern aus einer aus dem Gangunterschied abgeleiteten Größe. Dies kann bspw. ein Auftreffwinkel oder eine Auftreffkoordinate sein.

Dazu werden zu den Abtastzeitpunkten, zu denen eine Phasendifferenz Δ*ϕ* der Empfangssignale ermittelt wurde, und für die N Frequenzen zunächst zu den vieldeutigen Gangunterschieden die zugehörigen Auftreffwinkel und dann die Auftreffkoordinaten bestimmt. Dies liefert für jede der N Frequenzen vieldeutige Bodenprofile. Die vorhergehenden Schritte des vorstehend beschriebenen Verfahrens bleiben unverändert.

Diese Daten über die vieldeutigen Bodenprofile für die N Frequenzen werden für die Abtastzeitpunkte gesammelt, um mittels einer Dichteanalyse das eindeutige Bodenprofil 6 zu ermitteln. Es werden jedoch nicht, wie zuvor beschrieben, einzelne Intervalle 84 betrachtet, sondern einzelne sog. Flächenelemente. Für die Abtastzeitpunkte, für die N Frequenzen und für jede vieldeutige Auftreffkoordinate wird die Datendichte innerhalb desjenigen Flächenelementes berechnet, welches die Auftreffkoordinate beinhaltet. Dabei ist die Datendichte ein Maß für die Anzahl der erhobenen Daten innerhalb des Flächenelements. Die Auftreffkoordinaten der gleichen Frequenz werden jedoch nicht mit berücksichtigt bei der Ermittlung der Dichte.

Die Größe des Flächenelements wird in Abhängigkeit von dem Rechenaufwand festgelegt und ist für alle Auftreffkoordinaten gleich groß.

Zu jedem Abtastzeitpunkt wird diejenige Auftreffkoordinate, dessen zugehöriges Flächenelement eine maximale Datendichte besitzt, als gültig gekennzeichnet und entspricht somit dem wahren Bodenpunkt (x, y, z). Die anderen vieldeutigen Auftreffkoordinaten werden als ungültig gekennzeichnet.

Eine derartige Dichteanalyse, wie vorstehend beschrieben, ist ebenso unter Verwendung der Auftreffwinkel möglich.

Das vorstehend beschriebene Verfahren kann dahingehend abgewandelt werden, dass anstelle von zwei einzelnen Wandlern als Empfangsanordnung 28 ein Wandler-Array verwendet wird. Der Empfangsanordnung 28 wird ein Richtungsbildner nachgeschaltet, der in dem Unterwasserareal 8 eine Vielzahl von fächerartig aufgespannten Richtcharakteristiken erzeugt, deren horizontale Breite durch den horizontalen Öffnungswinkel der Richtcharakteristik bestimmt ist. Dies ermöglicht eine höhere Auflösung der Vermessung des Bodenprofils 6 entsprechend der Breite der Richtcharakteristiken.

In Abwandlung des beschriebenen Verfahrens kann das Unterwasserareal 8 auf der Steuer- und Backbordseite des Wasserfahrzeugs 2 aufgespannt werden. Dadurch werden gleichzeitig Unterwasserareale 8 auf beiden Seiten in Fahrtrichtung abgetastet. Ferner kann ein Unterwasserareal 8 in Vorausrichtung beleuchtet werden.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Vermessen eines Bodenprofils (6) mittels einer an einem Wasserfahrzeug (2) angebrachten Sendeanordnung (20) zum gerichteten Abstrahlen von Schallsignalen in ein Unterwasserareal (8) und einer an diesem Wasserfahrzeug (2) angebrachten Empfangsanordnung (28) mit wenigstens zwei elektroakustischen oder optoakustischen Wandlern zum Empfangen der von dem Bodenprofil (6) innerhalb des Unterwasserareals (8) reflektierten Schallwellen, aus denen die Wandler jeweils ein Empfangssignal (40; 42) erzeugen, welches zu vorbestimmten Abtastzeitpunkten abgetastet, digitalisiert und gespeichert wird und wobei nacheinander mittels der Sendeanordnung (20) mit einer Mehrzahl N vorbestimmten, voneinander verschiedenen Frequenzen ein Schallsignal in das Unterwasserareal (8) abgestrahlt wird und dessen vom Bodenprofil (6) reflektierten Anteile mittels der Empfangsanordnung (28) empfangen werden und die N verschiedenen Frequenzen aus dem Empfangssignal (40; 42) herausgefiltert werden und wobei, für eine Vielzahl der Abtastzeitpunkte und für die N Frequenzen der Empfangssignale (48₁,48₂,48₃, ... , 48*_{N}* ; 50₁, 50₂, 50₃, ..., 50*_{N}*) sowohl eine Phasendifferenz (Δ*ϕ*) als auch eine Laufzeit (r) dieser Empfangssignale ermittelt werden,
**dadurch gekennzeichnet, dass**
die elektroakustischen oder optoakustischen Wandler der Empfangsanordnung (28) in einem Abstand (30) größer als die halbe Wellenlänge (*λ*) des Empfangssignals (40; 42) angeordnet sind,
über die Phasendifferenzen (Δ*ϕ*) daraus resultierende Gangunterschiede der empfangenen Schallwellen zwischen zwei Wandlern der Empfangsanordnung (28) sowie zugehörige Empfangswinkel (66) ermittelt werden, für diese Abtastzeitpunkte und für die N Frequenzen mithilfe der Laufzeiten (*τ*) und der Empfangswinkel (66) Auftreffkoordinaten (x, y, z) ermittelt werden,
für die Auftreffkoordinaten (x, y, z) eine Datendichte innerhalb eines vorbestimmten, die Auftreffkoordinate (x, y, z) beinhaltendes Flächenelementes ermittelt wird, wobei die Datendichte ein Maß für die Anzahl der zuvor ermittelten Auftreffkoordinaten (x, y, z) innerhalb dieses Flächenelementes darstellt,
dasjenige Flächenelement ausgewählt wird, in dem die Datendichte maximal wird und die zu diesem Flächenelement gehörende Auftreffkoordinate (x, y, z) als die wahre Auftreffkoordinate (x, y, z) des Bodenprofils (6) ermittelt wird.

2. Verfahren nach Anspruch 1,
**dadurch gekennzeichnet, dass**
aus den jeweiligen Gangunterschieden Auftreffwinkel berechnet werden und für die Vielzahl der Abtastzeitpunkte und für die N Frequenzen jeweils in einem vorbestimmten Bereich (84) eine Datendichte der Auftreffwinkel der reflektierten Schallwellen auf dem Bodenprofil (6) ermittelt wird.

3. Verfahren nach Anspruch 1 oder 2,
**dadurch gekennzeichnet, dass**
die Empfangsanordnung (28) aus einer Vielzahl von elektroakustischen oder optoakustischen Wandlern besteht, wodurch die Schallwellen richtungsselektiv empfangen werden.

4. Vorrichtung zur Vermessung eines Bodenprofils (6) mittels einer an einem Wasserfahrzeug (2) angebrachten Sendeanordnung (20) zum gerichteten Abstrahlen von Schallsignalen in ein Unterwasserareal (8) und einer an diesem Wasserfahrzeug (2) angebrachten Empfangsanordnung (28) mit wenigstens zwei Wandlern zum Empfangen der von dem Bodenprofil (6) innerhalb des Unterwasserareals (8) reflektierten Schallwellen, aus denen die Wandler jeweils ein Empfangssignal (40;42) erzeugen, welches zu vorbestimmten Abtastzeitpunkten abtastbar, digitalisierbar und speicherbar ist und wobei nacheinander mittels der Sendeanordnung (20) mit einer Mehrzahl N vorbestimmten, voneinander verschiedenen Frequenzen ein Schallsignal in das Unterwasserareal (8) abstrahlbar ist und dessen vom Bodenprofil (6) reflektierten Anteile mittels der Empfangsanordnung (28) empfangbar sind und die N verschiedenen Frequenzen aus dem Empfangssignal (40; 42) herausfilterbar sind und wobei für eine Vielzahl der Abtastzeitpunkte und für die N Frequenzen der Empfangssignale (48₁,48₂,48₃, ...,48*_{N}*; 50₁, 50₂, 50₃, ... , 50*_{N}*) sowohl eine Phasendifferenz (Δ*ϕ*) als auch eine Laufzeit (*τ*) dieser Empfangssignale ermittelbar sind,
**gekennzeichnet durch**
eine Anordnung der elektroakustischen und/oder optoakustischen Wandler der Empfangsanordnung (28) in einem Abstand (30) größer als die halbe Wellenlänge (*λ*) des Empfangssignals (40; 42),
eine weitere Berechnungseinheit (54) zum Ermitteln der aus den Phasendifferenzen (Δ*ϕ*) resultierenden Gangunterschiede der empfangenen Schallwellen zwischen zwei Wandlern der Empfangsanordnung (28), eine weitere Berechnungseinheit (58) zum Ermitteln eines dem Gangunterschied zugehörigen Empfangswinkels (66),
eine weitere Berechnungseinheit (60) zum Ermitteln von Auftreffkoordinaten (x, y, z) mithilfe der Laufzeiten (*τ*) und der Empfangswinkel (66) für diese Abtastzeitpunkte und für die N Frequenzen,
eine weitere Berechnungseinheit (56) zum Ermitteln einer Datendichte jeweils innerhalb eines vorbestimmten, die Auftreffkoordinate beinhaltendes Flächenelementes, wobei die Datendichte ein Maß für die Anzahl der zuvor ermittelten Auftreffkoordinaten (x, y, z) innerhalb dieses Flächenelementes darstellt,
einen Maximumdetektor (56) zum Auswählen desjenigen Flächenelementes in dem die Datendichte maximal wird und zum Ermitteln einer zu diesem Flächenelement gehörenden Auftreffkoordinate (x, y, z) des Bodenprofils (6).

5. Vorrichtung nach Anspruch 4,
**gekennzeichnet durch**
eine weitere Berechnungseinheit (56) zum Ermitteln einer Datendichte der Auftreffwinkel der reflektierten Schallwellen auf dem Bodenprofil (6) für diese Abtastzeitpunkte und für die N Frequenzen jeweils in einem vorbestimmten Bereich (84).

6. Vorrichtung nach einem der Ansprüche 4 bis 5,
**dadurch gekennzeichnet, dass**
die Empfangsanordnung (28) aus einer Vielzahl von elektroakustischen oder optoakustischen Wandlern besteht, wodurch die Schallwellen richtungsselektiv empfangbar sind.

## Claims

1. Method for measuring a ground profile (6) by means of a transmitting arrangement (20) mounted on a watercraft (2) for the directed emission of acoustic signals into an underwater area (8) and by means of a receiving arrangement (28) mounted on said watercraft (2), which arrangement comprises at least two electroacoustic or optoacoustic transducers for receiving sound waves reflected by the ground profile (6) within the underwater area (8), from which sound waves the transducers respectively produce a received signal (40; 42), which is sampled, digitised and stored at predetermined sampling times, and wherein an acoustic signal is emitted successively into the underwater area (8) by means of the transmitting arrangement (20) with a plurality N of predetermined frequencies that are different from one another, and parts of said signal reflected by the ground profile (6) are received by means of the receiving arrangement (28) and the N different frequencies are filtered out of the received signal (40; 42) and wherein, for a plurality of sampling times and for the N frequencies of the received signals (48₁, 48₂, 48₃, ..., 48*_{N}*; 50₁, 50₂, 50₃, ..., 50*_{N}*) both a phase difference (Δ*ϕ*) and a runtime (*τ*) of these received signals are determined, **characterised in that**
the electroacoustic or optoacoustic transducers of the receiving arrangement (28) are arranged having a distance (30) greater than half the wavelength (*λ*) of the received signal (40; 42),
the phase differences (Δ*ϕ*) are used to determine path differences resulting therefrom of the received sound waves between two transducers of the receiving arrangement (28) and related receiving angles (66),
incident coordinates (x, y, z) are determined for these sampling times and for the N frequencies by means of the runtimes (*τ*) and the receiving angles (66),
a data density within a predetermined region containing the incident coordinates (x, y, z) is determined for the incident coordinates (x, y, z), wherein the data density represents a measure for the number of previously determined incident coordinates (x, y, z) within this region,
the region is selected in which the data density is maximal and the incident coordinate (x, y, z) belonging to this region is determined as the true incident coordinate (x, y, z) of the ground profile (6).

2. Method according to claim 1, **characterised in that** angles of incidence are calculated from the respective path differences and a data density of the angles of incidence of the reflected sound waves on the ground profile (6) is determined for the plurality of sampling times and for the respective N frequencies in a predetermined area (84).

3. Method according to claim 1 or 2, **characterised in that** the receiving arrangement (28) consists of a plurality of electroacoustic or optoacoustic transducers, whereby the sound waves are received directionally selectively.

4. Device for measuring a ground profile (6) by means of a transmitting arrangement (20) mounted on a water craft (2) for the directed emission of acoustic signals into an underwater area (8) and by means of a receiving arrangement (28) mounted on this water craft (2) with at least two transducers for receiving the sound waves reflected from the ground profile (6) within the underwater area (8), from which sound waves the transducers respectively produce a received signal (40; 42) which can be sampled, digitised and stored at predetermined sampling times and wherein an acoustic signal can be emitted successively into the underwater area (8) by means of the transmitting arrangement (20) with a plurality N of predetermined frequencies that are different from one another and parts of said signal reflected by the ground profile (6) can be received by means of the receiving arrangement (28) and the N different frequencies can be filtered out of the received signal (40; 42) and wherein both a phase difference (Δ*ϕ*) and a runtime (*τ*) of these received signals can be determined for a plurality of sampling times and for the N frequencies of the received signals (48₁, 48₂, 48₃, ..., 48*_{N}*; 50₁, 50₂, 50₃, ..., 50*_{N}*), **characterised in that**
an arrangement of the electroacoustic and/or optoacoustic transducers of the receiving arrangement (28) having a distance (30) greater than half the wavelength (*λ*) of the received signal (40; 42),
a further calculation unit (54) for determining the path differences of the received sound waves between two transducers of the receiving arrangement (28) resulting from the phase differences (Δ*ϕ*),
a further calculation unit (58) for determining a receiving angle (66) related to the path difference,
a further calculation unit (60) for determining incident coordinates (x, y, z) by means of the runtimes (*τ*) and the receiving angles (66) for these sampling times and for the N frequencies,
a further calculation unit (56) for determining a data density within a predetermined region containing the incident coordinate, wherein the data density represents a measure for the number of previously determined incident coordinates (x, y, z) within this region,
a maximum detector (56) for selecting that region in which the data density is maximal and for determining an incident coordinate (x, y, z) of the ground profile (6) belonging to this region.

5. Device according to claim 4, **characterised in that**
a further calculation unit (56) for determining a data density of the angles of incidence of the reflected sound waves by the ground profile (6) for these sampling times and for the respective N frequencies in a predetermined area (84).

6. Device according to one of claims 4 to 5, **characterised in that** the receiving arrangement (28) consists of a plurality of electroacoustic or optoacoustic transducers, whereby the sound waves can be received directionally selectively.

## Revendications

1. Procédé de mesure d'un profil du sol (6) au moyen d'un ensemble d'émission (20) monté sur un véhicule marin (2) pour l'émission directionnelle de signaux acoustiques dans une aire sous-marine (8) et d'un ensemble de réception (28) monté sur ce véhicule marin (2) comprenant au moins deux transducteurs électroacoustiques ou opto-acoustiques pour recevoir les ondes acoustiques réfléchies par le profil du sol (6) à l'intérieur de l'aire sous-marine (8), à partir desquelles les transducteurs génèrent respectivement un signal de réception (40 ; 42), lequel est échantillonné, numérisé et enregistré à des instants d'échantillonnage prédéterminés et dans lequel un signal acoustique est émis dans l'aire sous-marine (8) au moyen de l'ensemble d'émission (20) successivement avec une pluralité N de fréquences prédéterminées différentes les unes des autres et les fractions de ce signal acoustique réfléchies par le profil du sol (6) sont reçues au moyen de l'ensemble de réception (28) et les N différentes fréquences sont extraites par filtrage du signal de réception (40 ; 42) et dans lequel, pour une pluralité des instants d'échantillonnage et pour les N fréquences des signaux de réception (48₁, 48₂, 48₃, ..., 48_{N} ; 50₁, 50₂, 50₃, ..., 50_{N}), aussi bien une différence de phase (Δ*ϕ*) qu'un temps de propagation (*τ*) de ces signaux de réception sont déterminés,
**caractérisé en ce que**
les transducteurs électroacoustiques ou opto-acoustiques de l'ensemble de réception (28) sont agencés à une distance (30) supérieure à la moitié de la longueur d'onde (*λ*) du signal de réception (40 ; 42),
via les différences de phase (Δ*ϕ*), des différences de marche en résultant des ondes acoustiques reçues entre deux transducteurs de l'ensemble de réception (28) ainsi que des angles de réception (66) associés sont déterminés,
des coordonnées d'incidence (x, y, z) sont déterminées pour ces instants d'échantillonnage et pour les N fréquences à l'aide des temps de propagation (*τ*) et des angles de réception (66),
pour les coordonnées d'incidence (x, y, z), une densité de données à l'intérieur d'un élément de surface prédéterminé contenant la coordonnée d'incidence (x, y, z) est déterminée, la densité de données représentant une grandeur pour le nombre des coordonnées d'incidence (x, y, z) déterminées auparavant à l'intérieur de cet élément de surface,
l'élément de surface dans lequel la densité de données devient maximale est sélectionné et la coordonnée d'incidence (x, y, z) appartenant à cet élément de surface est déterminée comme étant la coordonnée d'incidence (x, y, z) réelle du profil du sol (6).

2. Procédé selon la revendication 1,
**caractérisé en ce que**
des angles d'incidence sont calculés à partir des différences de marche respectives et une densité de données des angles d'incidence des ondes acoustiques réfléchies sur le profil du sol (6) est déterminée pour la pluralité des instants d'échantillonnage et pour les N fréquences respectivement dans une zone prédéterminée (84).

3. Procédé selon la revendication 1 ou 2,
**caractérisé en ce que**
l'ensemble de réception (28) est constitué d'une pluralité de transducteurs électroacoustiques ou opto-acoustiques, ce par quoi les ondes acoustiques sont reçues de manière sélective en fonction de la direction.

4. Dispositif de mesure d'un profil du sol (6) au moyen d'un ensemble d'émission (20) monté sur un véhicule marin (2) pour l'émission directionnelle de signaux acoustiques dans une aire sous-marine (8) et d'un ensemble de réception (28) monté sur ce véhicule marin (2) comprenant au moins deux transducteurs pour recevoir les ondes acoustiques réfléchies par le profil du sol (6) à l'intérieur de l'aire sous-marine (8), à partir desquelles les transducteurs génèrent respectivement un signal de réception (40 ; 42), lequel peut être échantillonné, numérisé et enregistré à des instants d'échantillonnage prédéterminés et dans lequel un signal acoustique peut être émis dans l'aire sous-marine (8) au moyen de l'ensemble d'émission (20) successivement avec une pluralité N de fréquences prédéterminées différentes les unes des autres et les fractions de ce signal acoustique réfléchies par le profil du sol (6) peuvent être reçues au moyen de l'ensemble de réception (28) et les N différentes fréquences peuvent être extraites par filtrage du signal de réception (40 ; 42) et dans lequel, pour une pluralité des instants d'échantillonnage et pour les N fréquences des signaux de réception (48₁, 48₂, 48₃, ..., 48_{N} ; 50₁, 50₂, 50₃, ..., 50_{N}), aussi bien une différence de phase (Δ*ϕ*) qu'un temps de propagation (*τ*) de ces signaux de réception peuvent être déterminés,
**caractérisé par**
un agencement des transducteurs électroacoustiques ou opto-acoustiques de l'ensemble de réception (28) à une distance (30) supérieure à la moitié de la longueur d'onde (*λ*) du signal de réception (40 ; 42),
une autre unité de calcul (54) pour déterminer les différences de marche des ondes acoustiques reçues entre deux transducteurs de l'ensemble de réception (28) résultant des différences de phase (Δ*ϕ*),
une autre unité de calcul (58) pour déterminer un angle de réception (66) associé à la différence de marche,
une autre unité de calcul (60) pour déterminer des coordonnées d'incidence (x, y, z) à l'aide des temps de propagation (*τ*) et des angles de réception (66) pour ces instants d'échantillonnage et pour les N fréquences,
une autre unité de calcul (56) pour déterminer une densité de données respectivement à l'intérieur d'un élément de surface prédéterminé contenant la coordonnée d'incidence, la densité de données représentant une grandeur pour le nombre des coordonnées d'incidence (x, y, z) déterminées auparavant à l'intérieur de cet élément de surface,
un détecteur de maximum (56) pour sélectionner l'élément de surface dans lequel la densité de données devient maximale et pour déterminer une coordonnée d'incidence (x, y, z) du profil du sol (6) appartenant à cet élément de surface.

5. Dispositif selon la revendication 4,
**caractérisé par**
une autre unité de calcul (56) pour déterminer une densité de données des angles d'incidence des ondes acoustiques réfléchies sur le profil du sol (6) pour ces instants d'échantillonnage et pour les N fréquences respectivement dans une zone prédéterminée (84).

6. Dispositif selon l'une des revendications 4 à 5,
**caractérisé en ce que**
l'ensemble de réception (28) est constitué d'une pluralité de transducteurs électroacoustiques ou opto-acoustiques, ce par quoi les ondes acoustiques peuvent être reçues de manière sélective en fonction de la direction.
